# EUROPEAN PATENT SPECIFICATION

(11) **EP 1 422 460 B1**
(45) Date of publication and mention of the grant of the patent: **24.01.2007**
(21) Application number: 02360323.6
(22) Date of filing: 25.11.2002
(51) Int. Cl.: F16L 7/02, F16L 47/02, G02B 6/50

(54) **Sealing device**
Dichtungsvorrichtung
Dispositif d'étanchéité

(43) Date of publication of application: 26.05.2004
(73) Proprietor: Draka Comteq B.V., 1021 JZ Amsterdam (NL)
(72) Inventor: Leppert, Hans-Detlef, 41189 Mönchengladbach (DE)
(74) Representative: Dohmen, Johannes Maria Gerardus

(56) References cited:
- EP-A- 0 341 494
- US-A- 5 127 630
- US-A1- 2002 083 976

## Description

### Background of the invention

The invention relates to a sealing device for sealing a cable against a pipe or pipe branch, wherein the sealing device comprises a tubular body which is connectable to a cable by electro-fusion at one side.

Cables, in particular optical fiber cables, are often installed in buildings, plants, customer premises as well as in trunk-, metro- and access networks using already existing pipe infrastructures inside and outside of buildings. For example, cables are installed in gas, drinking water, sewage, or heating pipes. The cables must enter and exit the pipe system at certain locations. The fluid carried in the pipe system must not leave the pipe system at the points of entry and exit of the cable from the pipe system. Hence, the cable must be sealed against the pipe or a pipe branch where the cable enters or leaves the pipe system.

It is known to use multiple rubber seals for sealing the cable against the pipe. However, care must be taken not to affect the cable by applying too much radial pressure on the cable and on the other hand to still effect efficient sealing. Furthermore, rubber seals, in particular rubber sealing rings take up a certain amount of radial space. Hence the spacing between the cable and the inside of the pipe must be sufficiently large. The annular space between cable and pipe must be calculated exactly and the rubber seals must be manufactured accordingly. Additionally, rubber seals tend to age and therefore need maintenance.

From US 2002/0083976 A1 it is known to insert access fittings into a gas pipe and to introduce a service line conduit via a side branch of the access fittings. The service line conduit is sealed against the side branch by an electro-fusion coupling, which is attached to the sidebranch and to the service line conduit by electro-fusion.

In US 5,127,630 a method for inserting cables within a pipe is described. One end of the pipe is closed with a cap having an opening or post for introducing a flow of an agent and having a plurality of closed entry channels. One of said entry channels is opened and a cable is inserted through said opened entry channel. The cap is secured in the end of the pipe with a clip or band.

### Object of the invention

It is the object of the invention to provide a sealing device for sealing cables against pipes or pipe branches which can be easily installed and which does not require maintenance.

### Short description of the invention

This object is achieved by a sealing device characterized in that the sealing device is attachable to a pipe or pipe branch at the opposite side by screwing. The sealing device is attachable to the pipe or pipe branch and thus forms a fluid-tight connection with the pipe or pipe branch. To this end an adapter may be provided between the sealing device and the pipe or pipe branch in order to facilitate attachment. The stem of p.ex. a saddle fitting is in this context also regarded as pipe branch. The sealing device is attached to the cable by electro-fusion. This requires at least part of the inside of the tubular body of the sealing device, in which the cable is guided, and at least the part of the outer layer of the cable being guided in the pipe inlet or outlet to be of plastic, for instance polyethylene (PE). Application of heat causes the cable to be fused to the inside of the sealing device and vice versa. Thus, a permanent, non-aging seal between the cable and the pipe can be easily realized. Fluid, i.e. liquid or gas, cannot escape from the pipe system.

If the pipe or pipe branch are not made of plastic, the sealing device cannot be attached by electro-fusion. However, a sealing engagement is obtained by screwing the sealing device to the pipe. It is also possible to attach an adapter made of plastic to the pipe or pipe branch, p.ex. by screwing the adapter into or on the pipe or pipe branch and to attach the sealing device to the adapter by electro-fusion. The opposite side of the sealing device is designed such that it can be screwed to the pipe.

Thus, only one type of sealing device is needed, independent of the material of the pipe.

If the inner cross-section of the side connectable to the cable is adapted to the shape of the cable, a good sealing contact can be ensured. Preferably, the outside of the cable and the inside of the sealing device touch already prior to electro-fusion.

Electro-fusion can be carried out particularly easily if the sealing device is made of polyethylene, in particular high density polyethylene (HDPE). HDPE is particularly suited for electro-fusion.

In an advantageous embodiment the body comprises at least in sections an electrical resistance heating wire embedded in a skin layer. The wire or a winding of such a wire can be located in close proximity of the layer to be fused to the cable. Hence, the wire can be used to heat the sealing device and the cable at the location, where the parts are to be fused together.

In a further development the wire consists of copper. Copper is particularly suited for electrical resistance heating.

Further advantages can be extracted from the description and the enclosed drawing.

The embodiments mentioned are not to be understood as exhaustive enumeration but rather have exemplary character for the description of the invention.

### Drawings

The invention is shown in the drawing.
- **Fig. 1**: shows a cross-section through a pipe section and a sealing device according to the prior art;
- **Fig. 2**: shows the sealing device fused to a pipe branch and a cable according to the prior art; and
- **Fig. 3**: shows an embodiment of the sealing device according to the present invention.

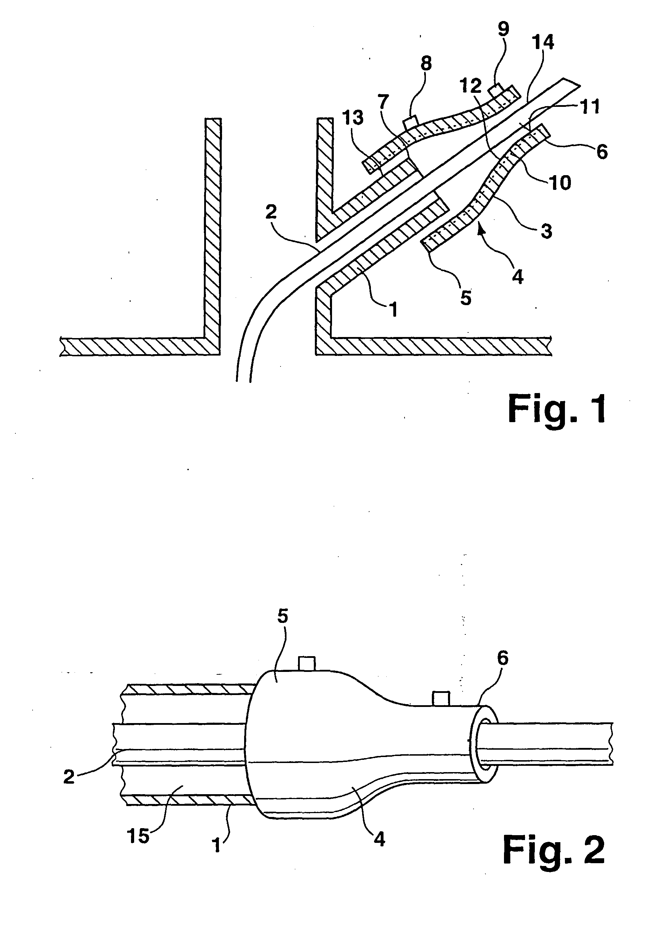

In **Fig. 1** a plastic pipe branch **1** is shown in cross-section which is used as exit point of a cable **2.** The cable **2** passes through the pipe branch **1** and the tubular body **3** of a sealing device **4** made of plastic material. The outer material of the cable **2** is the same as that of the sealing device **4**. With one end **5**, having a larger diameter than the opposite end **6**, the sealing device 4 is pushed over the free end **7** of the pipe branch **1**. The sealing device **4** is provided with electrodes **8, 9** being in contact with a copper wire **10** located in the vicinity of the inner surface **11** of the sealing device 4. Hence, the wire **10** is separated from the inner surface **11** by a thin material layer **12** only. By supplying a current to the wire 10 through the electrodes 8, 9, the heat necessary for fusion is generated by resistance heating. Thus, the end 5 of the sealing device 4 is fused to the outer surface **13** of the pipe branch 1. At the same time the end 6 is fused to the outer surface **14** of the cable 2. Consequently, a fluid-tight seal between the pipe branch 1 and the cable 2 is obtained.

**Fig. 2** shows the sealing device 4 of Fig. 1 being fused at one end 6 to the cable 2 and at the opposite end 5 to the pipe branch 1 which is shown in cross-section. A fluid-tight connection is obtained between the pipe branch 1 and the sealing device 4 as well as between the cable 2 and the sealing device 4. Fluid present in the space **15** cannot escape from the pipe branch 1.

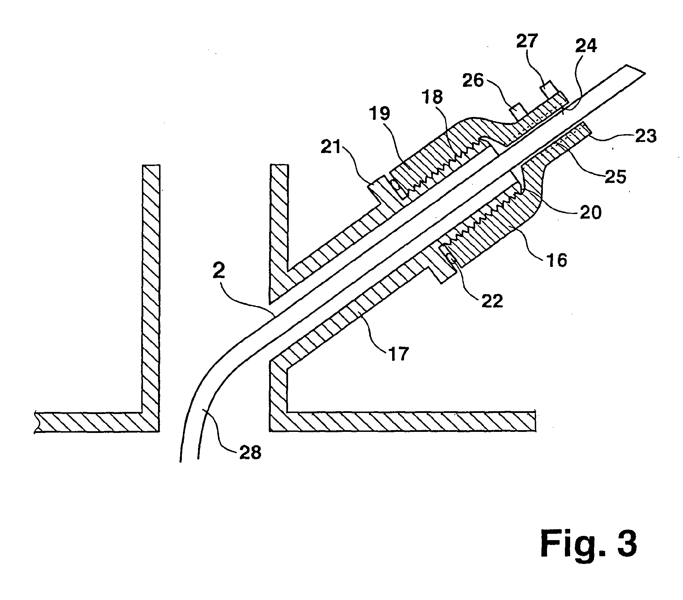

**Fig. 3** shows an embodiment of a sealing device 16 according to the present invention, which is attached to a non-plastic pipe branch **17**. The sealing device 16 comprises an internal screw thread **18** on one side **19**, which is used to screw the sealing device 16 onto the free end **20** of the pipe branch **17** which comprise a mating thread for the sealing device **16** to be screwed on. The pipe branch 17 comprises a steel ring **21**. Between the steel ring 21 and the sealing device 16 is provided a sealing ring **22** made of rubber to seal the sealing device 16 against the pipe branch 17. The sealing ring 22 is pressed against the steel ring 21 by the sealing device 16. On the side **23**, the sealing device 16 has a smaller diameter than on the side 19. In the vicinity of its inner surface **24** is provided a winding of a resistance heating wire **25**, which can be connected to a voltage supply by means of the electrodes **26, 27**. The side 23 can thus be electro-fused to the outside of the cable **28**, which passes through the pipe branch 17 and the sealing device 16. The outer layer of the cable 28 is made of plastic.

## Claims

1. Sealing device for sealing a cable against a pipe or pipe branch (17) wherein the sealing device (16) comprises a tubular body which is connectable to a cable (2, 28) by electro-fusion at one side (23) of the sealing device, **characterized in that** the sealing device is attachable to a pipe or pipe branch (17) by screwing at the opposite side (19) of the sealing device.

2. Sealing device according to claim 1, **characterized in that** the inner cross-section of the side (23) connectable to the cable (28) is adapted to the shape of the cable (28).

3. Sealing device according to claim 1, **characterized in that** the sealing device (16) is made of polyethylene, in particular high density polyethylene.

4. Sealing device according to claim 1, **characterized in that** the sealing device in the vicinity of the inner surface (24) of the side (23) is provided with a winding of resistance heating wire (25).

5. Sealing device according to claim 4, **characterized in that** the wire (25) consists of copper.

## Patentansprüche

1. Dichtungsvorrichtung zum Abdichten eines Kabels gegen ein Rohr oder eine Rohrverzweigung (17), wobei die Dichtungsvorrichtung (16) einen röhrenförmigen Körper umfasst, der auf einer Seite (23) der Dichtungsvorrichtung durch Elektrofusion an ein Kabel (2, 28) anschließbar ist, **dadurch gekennzeichnet, dass** die Dichtungsvorrichtung durch Anschrauben an ein Rohr oder eine Rohrverzweigung (17) auf der der Dichtungsvorrichtung gegenüberliegenden Seite (19) anbringbar ist.

2. Dichtungsvorrichtung nach Anspruch 1, **dadurch gekennzeichnet, dass** der Innenquerschnitt der an das Kabel (28) anschließbaren Seite (23) an die Form des Kabels (28) angepasst ist.

3. Dichtungsvorrichtung nach Anspruch 1, **dadurch gekennzeichnet, dass** die Dichtungsvorrichtung (16) aus Polyethylen, insbesondere aus Polyethylen hoher Dichte hergestellt ist.

4. Dichtungsvorrichtung nach Anspruch 1, **dadurch gekennzeichnet, dass** die Dichtungsvorrichtung benachbart der Innenoberfläche (24) der Seite (23) mit einem Wendel eines Widerstandsheizdrahts (25) versehen ist.

5. Dichtungsvorrichtung nach Anspruch 4, **dadurch gekennzeichnet, dass** der Draht (25) aus Kupfer besteht.

## Revendications

1. Dispositif d'étanchéité pour assurer l'étanchéité d'un câble contre un tuyau ou une branche de tuyau (17), le dispositif d'étanchéité (16) comprenant un corps tubulaire qui est susceptible d'être connecté à un câble (2, 28) par électro-fusion d'un côté (23) du dispositif d'étanchéité, **caractérisé en ce que** le dispositif d'étanchéité est susceptible d'être fixé à un tuyau ou à une branche de tuyau (17) par vissage du côté opposé (19) du dispositif d'étanchéité.

2. Dispositif d'étanchéité selon la revendication 1, **caractérisé en ce que** la section transversale interne du côté (23) susceptible d'être connecté au câble (28) est adaptée à la forme du câble (28).

3. Dispositif d'étanchéité selon la revendication 1, **caractérisé en ce que** le dispositif d'étanchéité (16) est fait de polyéthylène, en particulier de polyéthylène haute densité.

4. Dispositif d'étanchéité selon la revendication 1, **caractérisé en ce que** le dispositif d'étanchéité, dans le voisinage de la surface interne (24) du côté (23), est muni d'un enroulement de fil chauffant (25) de résistance.

5. Dispositif d'étanchéité selon la revendication 4, **caractérisé en ce que** le fil (25) se compose de cuivre.
